# EUROPÄISCHE PATENTANMELDUNG

(11) **EP 2 179 812 A2**
(43) Veröffentlichungstag der Anmeldung: **28.04.2010**
(21) Anmeldenummer: 09173130.7
(22) Anmeldetag: 15.10.2009
(51) Int. Cl.: B23H 9/10

(54) **Verfahren zur Herstellung von Laufschaufeln und einer Radscheibe für eine Turbomaschine sowie Vorrichtung, aufweisend Laufschaufeln und eine Radscheibe für eine Turbomaschine**

(30) Priorität: 23.10.2008 DE 102008052947
(71) Anmelder: SIEMENS AKTIENGESELLSCHAFT, 80333 München (DE)
(72) Erfinder: Göhler, Jens, 01594 Stauchitz (DE); Rupp, Helmut, 91154 Roth (DE)

(57) **Zusammenfassung**

Die Erfindung betrifft ein Verfahren zur Herstellung von Laufschaufeln (2) und einer Radscheibe (3) für eine Turbomaschine, insbesondere für eine Dampfturbine, wobei Strömungskanäle (4) zur Bildung der Laufschaufeln (2) mittels eines EDM-Verfahrens aus einer leitfähigen Radscheibe (3) oder dass Strömungskanäle (4) zur Bildung der Laufschaufeln (2) und die Radscheibe (3) mittels eines EDM-Verfahrens aus einer leitfähigen Scheibe (5) herauserodiert werden. Ferner betrifft die Erfindung eine Vorrichtung (1), aufweisend Laufschaufeln (2) und eine Radscheibe (3) für eine Turbomaschine, insbesondere eine Dampfturbine, wobei die Laufschaufeln (2) und die Radscheibe (3) der Vorrichtung einstückig miteinander verbunden sind, und wobei die Vorrichtung durch ein derartiges Verfahren erzeugt worden ist.

## Beschreibung

Die vorliegende Erfindung betrifft ein Verfahren zur Herstellung von Laufschaufeln und einer Radscheibe für eine Turbomaschine, insbesondere für eine Dampfturbine. Darüber hinaus betrifft die vorliegende Erfindung eine Vorrichtung, aufweisend Laufschaufeln und eine Radscheibe für eine Turbomaschine, insbesondere für eine Dampfturbine.

Die Laufschaufeln einer Regelstufe bzw. Gleichdruckstufe von Turbomaschinen, insbesondere thermischen Maschinen, wie einer Dampfturbine, unterliegen hohen statischen und dynamischen Beanspruchungen. Diese Beanspruchungen werden beispielsweise durch eine Teilebeaufschlagung ausgelöst. Es ist bekannt, die Laufschaufeln durch eine Hammerkopfverbindung, eine Steckfußverbindung oder eine axiale Tannenbaumfußverbindung formschlüssig oder durch eine Schweißverbindung stoffschlüssig an der Radscheibe des Rotors der Dampfturbine zu befestigen. Die Laufschaufeln können mit einer Deckplatte oder mit einem genieteten Deckband verbunden oder freistehend sein. Eine weitere Konstruktionsvariante für höhere Beanspruchungen ist die Herstellung der Laufschaufeln durch ein Erodierverfahren, insbesondere durch ein Senkerodierverfahren, aus einem ringförmigen Element. Insbesondere besitzen beim Senkerodieren die Laufschaufeln herstellungsbedingt keine Deckplatte, sind freistehend und nicht verspannt. Für höchste Beanspruchungen und Wirkungsgrade kommt die Ausführung eines aufgeschweißten Ringelementes, bei dem die Laufschaufelprofile und die Deckplatten integraler Bestandteil des Ringelementes sind, zur Anwendung. Das Ringelement wird mittels eines Schweißverfahrens mit der Radscheibe des Rotors verbunden. Die Strömungskanäle in dem Ringelement werden mittels des EDM-Verfahrens (EDM-Electrical Discharge Maschining) hergestellt. D.h., es wird ein einteiliges Ringelement, bestehend aus den Laufschaufelprofilen und einem integralen Deckband (Bandage), mittels des EDM-Verfahrens hergestellt. Dieses derart erzeugte Ringelement wird mit der Radscheibe durch eine Schweißverbindung verbunden.

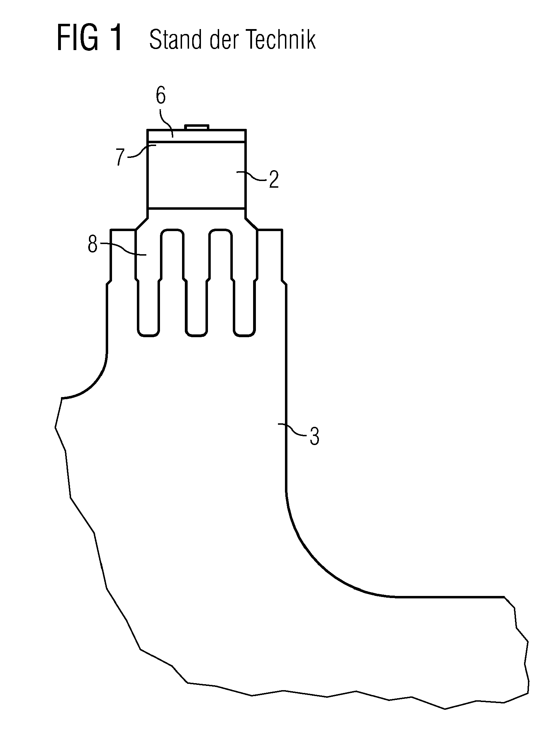

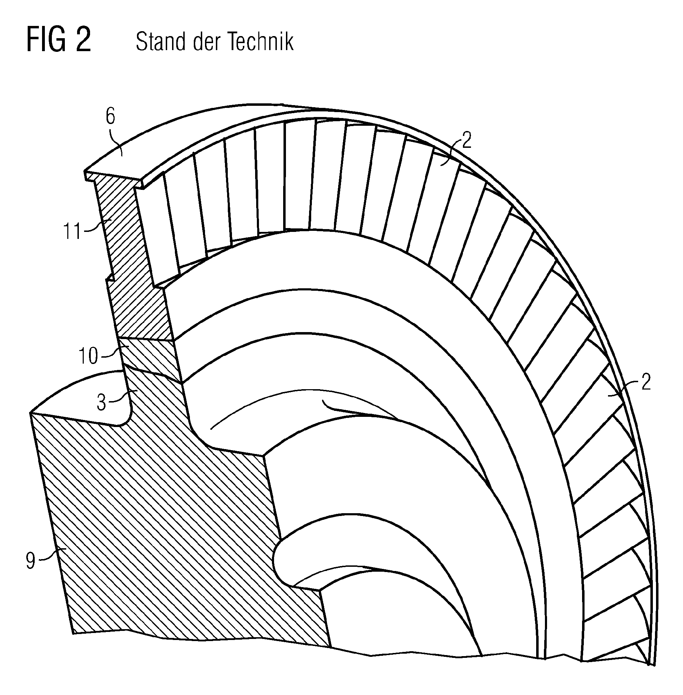

In den Fig. 1 und 2 sind bekannte Verbindungen zwischen Laufschaufeln 2 und einer Radscheibe 3 gezeigt. In der Fig. 1 ist einer Steckfußverbindung 8 zwischen einer Laufschaufel 2 und der Radscheibe 3 dargestellt. In der Fig. 2 sind die Laufschaufeln 2 Teil eines Ringelementes 11. Dieses Ringelement 11 ist mittels einer Schweißverbindung 10 an der Radscheibe 3 des Rotors 9 befestigt.

Die formschlüssige Verbindung einzelner Laufschaufeln oder von Zwillingslaufschaufeln und der Radscheibe durch eine Hammerkopfverbindung, eine Steckfußverbindung oder eine axiale Tannenbaumfußverbindung weist den Nachteil auf, dass sie keinen hohen statischen und dynamischen Beanspruchungen standhält.

Einen weiteren Nachteil stellt die Schweißverbindung zwischen den Laufschaufeln bzw. zwischen dem Ringelement und der Radscheibe dar. Aufgrund der hohen statischen und dynamischen Beanspruchungen, insbesondere bei Dampfturbinen, kann es zu Bruchstellen oder Leckagen an der Schweißverbindung kommen. Ferner sind derartige Schweißverbindungen sehr aufwendig herzustellen.

Die Aufgabe der vorliegenden Erfindung besteht darin, eine besonders stabile Verbindung zwischen den Laufschaufeln und der Radscheibe einer Turbomaschine, insbesondere einer Dampfturbine, zu schaffen.

Erfindungsgemäß wird diese Aufgabe durch ein Verfahren zur Herstellung von Laufschaufeln und einer Radscheibe für eine Turbomaschine mit den Merkmalen gemäß dem unabhängigen Patentanspruch 1 sowie durch eine Vorrichtung, aufweisend Laufschaufeln und eine Radscheibe für eine Turbomaschine, mit den Merkmalen gemäß dem unabhängigen Patentanspruch 5 gelöst. Weitere Merkmale und Details der Erfindung ergeben sich aus den Unteransprüchen, der Beschreibung sowie den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Vorrichtung, und jeweils umgekehrt, so dass bezüglich der Offenbarung zu den einzelnen Erfindungsaspekten stets wechselseitig Bezug genommen wird.

Gemäß dem ersten Aspekt der Erfindung wird die Aufgabe durch ein Verfahren zur Herstellung von Laufschaufeln und einer Radscheibe für eine Turbomaschine, insbesondere für eine Dampfturbine, wobei Strömungskanäle zur Bildung der Laufschaufeln mittels eines EDM-Verfahrens aus einer leitfähigen Radscheibe oder wobei Strömungskanäle zur Bildung der Laufschaufeln und die Radscheibe mittels eines EDM-Verfahrens aus einer leitfähigen Scheibe herauserodiert werden, gelöst.

Kern der Erfindung ist, dass die Laufschaufeln und die Radscheibe einstückig hergestellt werden. D.h., die Laufschaufeln und die Radscheibe werden aus einer leitfähigen Scheibe herauserodiert. Weist die Scheibe bereits die Breite der benötigen Radscheibe auf, deren Durchmesser allerdings zu groß dimensioniert ist, werden aus den zu groß dimensionierten Bereichen dieser Radscheibe die Strömungskanäle zur Bildung der Laufschaufeln herauserodiert. Anderenfalls wird aus einer Scheibe neben den Strömungskanälen auch die Radscheibe selbst durch ein EDM-Verfahren, d.h. durch ein Funkenerodieren, herauserodiert. Dadurch, dass die Strömungskanäle bzw. die Laufschaufeln sowie die Radscheibe direkt aus ein und demselben Werkstück durch ein EDM-Verfahren gefertigt werden, besteht zwischen den Laufschaufeln und der Radscheibe keine Schweißverbindung, keine formschlüssig oder kraftschlüssige Verbindung. Die einstückige Ausgestaltung der Laufschaufeln und der Radscheibe trotzt sehr hohen statischen und dynamischen Beanspruchungen. Insbesondere können die Strömungskanäle der Gleichdruckstufe einer Dampfturbine derart gefertigt werden.

Ein weiterer Vorteil der einstückigen Ausbildung der Laufschaufeln und der Radscheibe liegt darin, dass durch das EDM-Verfahren die Abmaße der Radscheibe und der Laufschaufeln sehr exakt herausgearbeitet werden können. Eine derartig hergestellte Vorrichtung, bei der die Laufschaufeln einstückig mit der Radscheibe ausgebildet sind, ist weniger fehleranfällig, als zweiteilige Vorrichtungen, bei denen die Laufschaufeln form- und/oder stoffschlüssig an der Radscheibe fixiert sind. Durch die integrale Ausgestaltung der Laufschaufeln an der Radscheibe, ist eine derartige Vorrichtung höher belastbar und dauerhafter einsetzbar.

Bevorzugt ist ferner ein Verfahren, bei dem an dem umlaufenden freien Ende der Radscheibe bzw. der Scheibe eine Deckplatte bzw. ein Deckband und/oder Dämpferdrähte aus der Radscheibe bzw. der Scheibe mittels des EDM-Verfahrens herauserodiert wird, wobei die Deckplatte bzw. das Deckband und/oder die Dämpferdrähte die Enden benachbarter Laufschaufeln einstückig miteinander verbindet. D.h., zusätzlich zu dem Herauserodieren der Strömungskanäle, kann durch das EDM-Verfahren auch eine Deckplatte bzw. ein Deckband oder Dämpferdrähte an den der Radscheibe abgewandten Seiten der Laufräder einstückig aus der Radscheibe bzw. der Scheibe hergestellt werden. Eine derartige Vorrichtung, bei der die Radscheibe, die Laufschaufeln und die Deckplatte bzw. das Deckband oder Dämpferdrähte einstückig hergestellt werden, kann besonders hohen statischen und dynamischen Beanspruchungen ausgesetzt werden.

Die hohen Belastungen auf die Laufschaufeln bzw. auf die Verbindung zwischen den Laufschaufeln und der Radscheibe resultieren aus der geminderten Materialfestigkeit infolge der hohen vorherrschenden Temperaturen und aus den statischen Spannungen infolge der hohen wirkenden Fliehkräfte, die proportional zum Quadrat der Drehzahl des Rotors sind. Ferner entstehen die hohen Beanspruchungen durch dynamische Spannungen infolge der Schwingbewegungen der Laufschaufeln. Durch derartige Dämpfungsmaßnahmen können die Schwingungsamplituden der Laufschaufeln reduziert werden und somit das Risiko eines Schadens an den Laufschaufeln bzw. an der Verbindung zwischen den Laufschaufeln und der Radscheibe vermieden werden. Durch die einstückige Ausbildung der Dämpfungselemente, wie des Deckbandes oder der Dämpferdrähte, mit den Laufschaufeln, sind diese Verbindungen besonders strapazierfähig und können hohen Beanspruchungen ausgesetzt werden.
Durch die einstückige Ausgestaltung der Laufschaufeln und der Radscheibe existieren keine Kontaktzonen zwischen diesen und somit kann es auch zu keinen Relativbewegungen zwischen den Laufschaufeln und der Radscheibe kommen. Die Vorteile sind vielfältig. Zum einen werden die Kosten für die Wartung und die Instandhaltung einer derartigen einstückigen Vorrichtung herabgesetzt. Ferner können leichtere und effizientere Laufschaufeln hergestellt werden, da das Risiko eines Schwingungsbruches einer Laufschaufel oder einer Verbindung zwischen einer Laufschaufel und der Radscheibe deutlich gemindert wird. Die einstückige Ausbildung der Radscheibe, der Laufschaufeln und alternativ zusätzlich des Deckbandes bzw. der Dämpferdrähte erhöhen die Betriebssicherheit der Gleichdruckstufe einer Turbomaschine und damit der gesamten Turbomaschine, insbesondere einer Dampfturbine. Durch die einstückige Verbindung der Laufschaufeln mit der Radscheibe können diese mit sehr hohen Drehzahlen betrieben werden.

Insbesondere bevorzugt ist ein Verfahren, bei dem die Strömungskanäle zur Bildung der Laufschaufeln, die Radscheibe und/oder die Deckplatte bzw. das Deckband oder die Dämpferdrähte durch Senkerodieren aus der leitfähigen Radscheibe bzw. der leitfähigen Scheibe herauserodiert werden. Beim Senkerodieren entspricht die Elektrode der Negativform des herzustellenden Werkstücks. Durch den funkenerosiven Abtrag werden alle Konturen der Laufschaufeln, der Radscheibe und des Deckbandes oder des Dämpferdrahtes mit sehr hoher Genauigkeit im Werkstück, d.h. der Scheibe, abgebildet. Insbesondere bei harten Werkstoffen können durch das Senkerodieren komplexe Formen mit hoher Genauigkeit und guten Oberflächeneigenschaften hergestellt werden.

Sollen spezielle Bahnen, Löcher und Hinterschneidungen oder geschwungene Formen der Laufschaufeln erzeugt werden, ist aber das EDM-Verfahren dem Senkerodieren vorzuziehen.

Durch das Verfahren können leifähige Radscheiben bzw. leitfähige Scheiben aus einem harten Metall bearbeitet werden. So kann die leifähige Radscheibe bzw. die leitfähige Scheibe beispielsweise aus Stahl oder Titan ausgebildet sein.

Gemäß dem zweiten Aspekt der Erfindung wird die Aufgabe durch eine Vorrichtung, aufweisend Laufschaufeln und eine Radscheibe für eine Turbomaschine, insbesondere für eine Dampfturbine, wobei die Laufschaufeln und die Radscheibe der Vorrichtung einstückig miteinander verbunden sind, und wobei die Vorrichtung durch ein Verfahren gemäß dem ersten Aspekt der Erfindung erzeugt worden ist, gelöst. Eine derartige Vorrichtung ist besonders stabil ausgebildet und hält hohen statischen und dynamischen Beanspruchungen stand. Durch die einstückige Ausgestaltung der Laufschaufeln und der Radscheibe fallen die fehleranfälligen Schweißverbindungen, form- oder kraftschlüssigen Verbindungen weg. Ferner fallen keine Relativbewegungen zwischen einer Laufschaufel und der Radscheibe an. Eine derartige Vorrichtung ist höher belastbar und dauerhafter einsetzbar, als eine Vorrichtung, bei der die Laufschaufeln, sei es auch in Form eines Ringelementes, an der Radscheibe angeschweißt sind.

Besonders bevorzugt ist eine derartige Vorrichtung, bei der die freien Enden der Laufschaufeln einstückig durch eine Deckplatte bzw. ein Deckband und/oder durch Dämpferdrähte miteinander verbunden sind. Hierdurch wird eine besonders stabile Vorrichtung für eine Gleichdruckstufe einer Dampfturbine geschaffen. Durch nach Nichtvorhandensein von Fugen oder Schweißnähten zwischen sämtlichen Bauteilen der Vorrichtung, ist diese weniger anfällig und dauerhafter einsetzbar, als bekannte Vorrichtungen.

Der Stand der Technik und die vorliegende Erfindung werden nun anhand der beigefügten Zeichnungen näher erläutert, in denen zeigen:
- Figur 1: bekannte Steckfußverbindung zwischen einer Laufschaufel und einer Radscheibe (Stand der Technik);
- Figur 2: bekannte Schweißverbindung zwischen einer Laufschaufel und einer Radscheibe (Stand der Technik);
- Figur 3: Einstückige Vorrichtung aus Laufschaufeln, Radscheibe und Deckband.

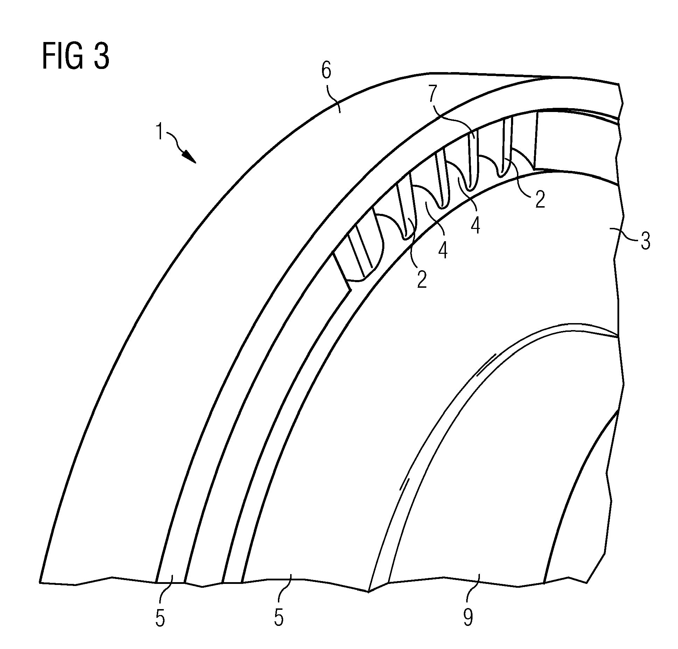

Fig. 3 zeigt eine mögliche Ausführungsform der erfindungsgemäßen Vorrichtung 1. Diese Vorrichtung 1 zeichnet sich dadurch aus, dass die Laufschaufeln 2, das Deckband 6 und die Radscheibe 3 aus einer einzigen Scheibe 5 hergestellt ist. D.h., die Laufschaufeln 2, das Deckband 6 und die Radscheibe 3 sind einstückig miteinander verbunden. Dies wird dadurch erreicht, indem aus der Scheibe 5 mittels eines EDM-Verfahrens, insbesondere mittels eines Senkerodier-Verfahrens, die Laufschaufeln 2, das Deckband 6 und die Radscheibe 3 erzeugt worden sind. Aus der Scheibe 5 sind die Strömungskanal 4 zur Bildung der Laufschaufeln 2 herauserodiert. Die Vorrichtung zeichnet sich dadurch aus, dass keine Trennfuge oder Schweißnaht vorhanden ist. Insbesondere durch die einstückige Ausbildung der Laufschaufeln 2 und der Radscheibe 3 ist die Vorrichtung 1 in diesem Übergangsbereich besonders stabil und hält hohen statischen und dynamischen Beanspruchungen statt.

Das Deckband 6, auch als Bandage bezeichnet, ist einstückig an den Enden 7 der Laufschaufeln 2 angeordnet.

Die Erfindung beschreibt die Herstellung der Laufschaufeln 2 bzw. der Laufschaufelprofile und des integralen Deckbandes 6 direkt an der Radscheibe 3 des Rotors 9 mittels des EDM-Verfahrens. Die Strömungskanäle 4 der Gleichdruckstufe werden direkt aus der Radscheibe 3 herauserodiert. Das Deckband 6 ist nicht geteilt. Es besteht an keiner Stelle der Vorrichtung 1 eine Schweißverbindung, eine Formschluss oder eine kraftschlüssige Verbindung.

Gegenüber formschlüssigen Konstruktionslösungen , wie Hammerkopf-, Steckfuß- oder Tannenbaumfußverbindungen ergeben sich folgende Vorteile: Die einstückige Vorrichtung 1, bestehend aus Radscheibe 3, Laufschaufeln 2 und Deckband 6, ist geeignet für höchste statische und dynamische Beanspruchungen. Eine Fußbefestigung entfällt. Die Laufschaufeln 2 sind integraler Bestandteil der Radscheibe 3. Die Radscheibe 3 besitzt durch das ebenfalls integrale Deckband 6 eine höchstmögliche Dämpfung bezüglich einer Schwingungsanregung und gewährleistet einen guten Stufenwirkungsgrad, da das Deckband 6 zusätzlich als äußere Abdichtung des Strömungskanals fungiert.

Gegenüber eines auf die Radscheibe 3 aufgeschweißten Ringelementes 11, besteht hier der Vorteil, dass die Laufschaufeln 2 ein integraler Bestandteil der Radscheibe 3 sind und somit das Schweißen entfällt.

## Patentansprüche

1. Verfahren zur Herstellung von Laufschaufeln (2) und einer Radscheibe (3) für eine Turbomaschine, insbesondere für eine Dampfturbine, **dadurch gekennzeichnet, dass** Strömungskanäle (4) zur Bildung der Laufschaufeln (2) mittels eines EDM-Verfahrens aus einer leitfähigen Radscheibe (3) oder dass Strömungskanäle (4) zur Bildung der Laufschaufeln (2) und die Radscheibe (3) mittels eines EDM-Verfahrens aus einer leitfähigen Scheibe (5) herauserodiert werden.

2. Verfahren nach Anspruch 1, **dadurch gekennzeichnet, dass** an dem umlaufenden freien Ende der Radscheibe (3) bzw. der Scheibe (5) eine Deckplatte bzw. ein Deckband (6) und/oder Dämpferdrähte aus der Radscheibe (3) bzw. der Scheibe (5) mittels des EDM-Verfahrens herauserodiert wird, die/das die Enden (7) benachbarter Laufschaufeln (2) einstückig miteinander verbindet.

3. Verfahren nach Anspruch 1 oder 2, **dadurch gekennzeichnet, dass** die Strömungskanäle (4) zur Bildung der Laufschaufeln (2), die Radscheibe (3) und/oder die Deckplatte bzw. das Deckband (6) oder die Dämpferdrähte durch Senkerodieren aus der leitfähigen Radscheibe (3) bzw. der leitfähigen Scheibe (5) herauserodiert werden.

4. Verfahren nach einem der Ansprüche 1 bis 3, **dadurch gekennzeichnet, dass** die leifähige Radscheibe (3) bzw. die leitfähige Scheibe (5) aus einem harten Metall ausgebildet ist.

5. Vorrichtung (1), aufweisend Laufschaufeln (2) und eine Radscheibe (3) für eine Turbomaschine, insbesondere eine Dampfturbine, **dadurch gekennzeichnet, dass** die Laufschaufeln (2) und die Radscheibe (3) der Vorrichtung einstückig miteinander verbunden sind, wobei die Vorrichtung durch ein Verfahren nach einem der Ansprüche 1 bis 4 erzeugt worden ist.

6. Vorrichtung nach Anspruch 5, **dadurch gekennzeichnet, dass** die freien Enden (7) der Laufschaufeln (2) einstückig durch eine Deckplatte bzw. ein Deckband (6) und/oder miteinander verbunden sind.
